(19) Europäisches Patentamt / European Patent Office / Office européen des brevets

(11) **EP 1 744 523 A1**

(12) **EUROPEAN PATENT APPLICATION**

(43) Date of publication:
**17.01.2007 Bulletin 2007/03**

(51) Int Cl.:
**H04M 1/274** (2006.01)

(21) Application number: **05106480.6**

(22) Date of filing: **14.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Sony Ericsson Mobile Communications AB**
**221 88 Lund (SE)**

(72) Inventor: **Foxenland, Eral**
**254 41 Helsingborg (SE)**

(74) Representative: **Akerman, Marten Lennart et al**
**Albihns Malmö AB**
**Box 4289**
**203 14 Malmö (SE)**

(54) **Device with highlighted menu**

(57) The invention relates to a device (1) with an interaction dependent user interface (2). Particularly a value of a parameter of an object (5) of the interface is dependent of the user activities, i.e. an object of the interface behaves differently in dependence of how fast the user is navigating and how frequent selections are made. In one embodiment, the user interface comprises a menu (3) of selectable items (4). The function is defined such that the value of the parameter is increased by an increment every time the user selects a new item and the increment is decaying with time, the value of the parameter varying between a maximum and a minimum value.

FIG 1

EP 1 744 523 A1

**Description**

Field of the invention

The present invention relates to a device with an interaction dependent user interface. Particularly a parameter of an object of the interface is dependent on the time and frequency of user movements in a menu. The invention provides an interface which is experienced as more lively since it is responding to the user's activities.

State of the art

Small portable devices with a display often have a menu with items which may be selected by the user to control operation of the device. A selected item may for example be shown by highlighting, i.e. a symbol is shown with a different or reversed colour with respect to the surrounding background and symbols. The user may possibly change the shape, colour, speed of the highlight as such, but only as a fixed setting, and the interface is not adapting to the way the user moves the highlight, for instance fast or slow, frequent or infrequent movements.
However, the user behaves differently in different situations and applications. When choosing one item out of many, the user is often speeding up the interaction when closing in on an item of choice. When a user is new to a list and its contents he will often wander around, maybe up and down several times, making long stops in the navigation and then starting again. In a prior art interface, the interface respond exactly the same in both situations. Thus, there is a need for a user interface responding adaptively to user behaviour in order to guide the user in a more responsive way.

Summary of the invention

In the present invention the user interface is dependent of the user activities, i.e. an object of the interface behaves differently in dependence of how fast the user is navigating and how frequent selections are made.
The present invention provides a device having a user interface in which user activities are manifested by means of an object associated with a parameter, wherein the value of the parameter is a function dependent on user activity.
In one embodiment, the user interface comprises a menu of selectable items, said function being defined such that the value of the parameter is increased by an increment every time the user selects a new item and the increment is decaying with time, the value of the parameter varying between a maximum and a minimum value.
The increment may be decaying linearly with time, and may be defined as: increment = $K(T-t_i)$; $t_i$ is the time from user activity i and goes from 0 to T; K is a constant.

The increment may be decaying reversed exponentially with time, and may be defined as:

$$increment = S_1(S_2^{\frac{T-t_i}{T}} - 1);$$ $t_i$ is the time from user activity i and goes from 0 to T; $S_1$ and $S_2$ are constants.
Preferably, the user interface comprises a visual display, and the parameter may be associated with colour, contrast, shape, size, and/or transparency of a highlight.
In a further embodiment, the user interface comprises sound signal means, and the parameter further may be associated with sound volume, sound frequency and/or duration of a signal.
In a still further embodiment, the user interface comprises vibrator means, and the parameter further may be associated with vibration magnitude, vibration frequency and/or duration of a vibration.
The device may be a portable telephone, a pager, a communicator, a smart phone, or an electronic organiser.

Brief description of the drawings

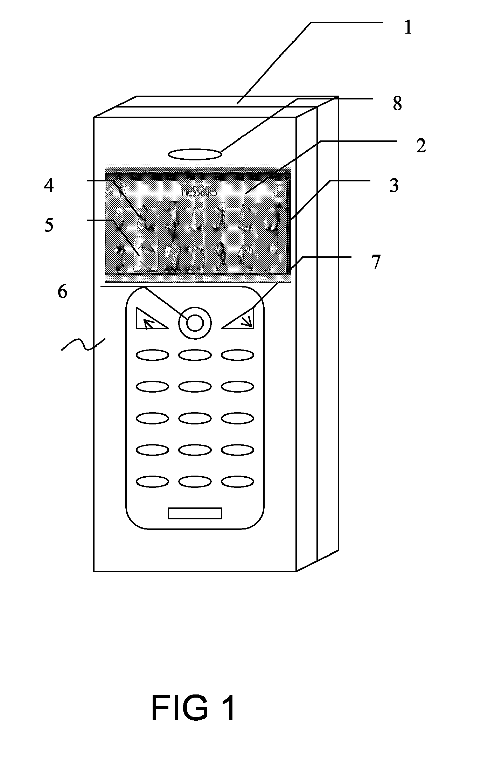

The invention will be described in detail below with reference to the accompanying drawings in which the only figure 1 is a schematic view of a mobile phone incorporating the invention.

Detailed description of preferred embodiments

The invention is applicable in devices with user interfaces, particularly having displays, such as portable telephones, pagers, communicators, smart phones and electronic organisers. The components of such devices not involved with the invention will not be discussed here.
As an example, a mobile telephone 1 incorporating the present invention is shown in figure 1. The phone 1 incorporates a display 2 at the moment showing a menu 3 with selectable items 4. One item is selected at the moment as is shown by the highlight 5. In this case the highlight is manifested by means of the surrounding square which is lighter than the surrounding background. Also, the symbol itself may have been enlarged and changed shape etc. The selection of an item may also be accompanied by a sound signal such as a click or a tone, and a vibration. For simplicity in this specification all these manifestations of a selection are referred to as an object of the user interface.
The sound signal is produced by a loudspeaker 8 and the vibration is produced by means comprising a vibration motor (not shown).
As is conventional selection of a menu item causing the highlight 5 is performed by means of navigation means, such as a joystick 6 and/or other navigation keys 7.

In the present invention, the user interface, and particularly the highlight graphics in lists, tabs, desktops etc. or any other graphics moving dependent on the users navigation in the user interface, is adaptable to the level of interaction, such as the number of steps of movement, the user utilises in the particular user interface. The invention is applicable to all highlights/moving graphics dependent of the users navigations.

In one embodiment, the brightness and/or possibly other visual parameters like colour, contrast, shape, size, transparency etc. of the highlight will increase instantly, or almost instantly, a specific value for every time a user selects an item. The selection typically involves movement one step/increment in a list or menu. The brightness (or another parameter) shall then decay all the way back to the original value over a certain amount of time. The effect shall be accumulative meaning that if the decay time is set to five seconds for example, and the user moves one step, waits three seconds and then move another step, the highlight will take seven seconds (5-3+5=7) to get back to the original level. In practise this will mean that fast navigation will be manifested through the highlight in that it will "flare up" and get more intense faster. Slower navigation, with more rest in between navigation steps, will also be manifested in that the appearance of the highlight will match the user's navigation style that particular time. The more steps navigated and the fewer seconds in between will generate a more and more bright highlight.

The decay can be linear or reversed exponential dependent on the user's preferences on look and behaviour. If sound and/or vibration effects are utilised in navigating the interface parameters of the sound and vibration could of course follow this system in order to better match user's actual navigation pattern for that particular moment. Parameters associated with sound are typically sound volume, sound frequency and duration of a signal. Also the sound signal as such could be made dependent on the user's activity.

Parameters associated with vibration are typically vibration magnitude, vibration frequency and duration.

The parameter varies between a minimum value and maximum value. The minimum value is the value of the parameter after an increment has decayed to zero. The maximum value is a limit depending on the interface. The general formula is that the parameter is increased each time the user selects an item by an increment. Each increment is added to the old parameter value. Each increment is also decaying with the time $t_i$ from the user activity i in question. When the time $t_i$ has reached a limit T the increment has decayed to 0. Generally the formula for the parameter is

new value = minimum value + increment 1 + increment 2 + .....

Each increment may decay linearly, i.e.

increment i = K(T- $t_i$); $t_i$ is the time from user activity i and goes from 0 to T; K is a constant.

In an alternative the increment is decaying reversed exponentially

$$\text{increment i} = S_1(S_2^{\frac{T-t_i}{T}} - 1) ;$$ $t_i$ is the time from user activity i and goes from 0 to T; $S_1$ and $S_2$ are constants. The parameter can be adapted to individual user interface objects and to particular products. The formula is suitably implemented in software.

The constants K, $S_1$, $S_2$ and T are predefined and stored in the device. Suitably T is five seconds. T may be varied by the user according to his preferences.

The invention will provide a lively and dynamic addition to the user interface in a way that will communicate "intelligence" without interfering with the main purpose of the interface to aid the user to make a choice. The user interface will adapt itself and differ in many ways based on a particular situation, user, stress level of the user, task that will be executed etc.

The scope of the invention is only limited by the claims below.

## Claims

1. A device (1) having a user interface (2) in which user activities are manifested by means of an object (5) associated with a parameter, wherein the value of the parameter is a function dependent on user activity.

2. A device according to claim 1, wherein the user interface (5) comprises a menu (3) of selectable items (4), said function being defined such that the value of the parameter is increased by an increment every time the user selects a new item (4) and the increment is decaying with time, the value of the parameter varying between a maximum and a minimum value.

3. A device according to claim 2, wherein the increment is decaying linearly with time.

4. A device according to claim 3, wherein the increment is defined as:
   increment = K(T-$t_i$); $t_i$ is the time from user activity i and goes from 0 to T; K is a constant.

5. A device according to claim 2, wherein the increment is decaying reversed exponentially with time.

6. A device according to claim 5, wherein the increment is defined as: $$\text{increment} = S_1(S_2^{\frac{T-t_i}{T}} - 1) ;$$ $t_i$ is the time from user activity i and goes from 0 to T; $S_1$ and $S_2$ are constants.

**7.** A device according to any one of claims 1 to 6, wherein the user interface comprises a visual display (2).

**8.** A device according to claim 7, wherein the parameter is associated with colour, contrast, shape, size, and/or transparency of a highlight (5).

**9.** A device according to any one of claims 1 to 8, wherein the user interface comprises sound signal means (8).

**10.** A device according to claim 9, wherein the parameter further is associated with sound volume, sound frequency and/or duration of a signal.

**11.** A device according to any one of claims 1 to 10, wherein the user interface comprises vibrator means.

**12.** A device according to claim 11, wherein the parameter further is associated with vibration magnitude, vibration frequency and/or duration of a vibration.

**13.** A device according to any one of claims 1 to 12, wherein the device is a portable telephone (1), a pager, a communicator, a smart phone, or an electronic organiser.

FIG 1

**European Patent Office**

**EUROPEAN SEARCH REPORT**

Application Number

EP 05 10 6480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 111 879 A (SONY INTERNATIONAL GMBH) 27 June 2001 (2001-06-27) * abstract * * paragraph [0013] - paragraph [0020] * | 1 | H04M1/274 |
| A | | 2-13 | |
| X | EP 0 917 330 A (NEC CORPORATION) 19 May 1999 (1999-05-19) * abstract * * paragraph [0014] - paragraph [0044]; figures 1-6 * | 1 | |
| A | | 2-13 | |
| X | US 2002/009193 A1 (DEGUCHI MANABU) 24 January 2002 (2002-01-24) * abstract * * paragraphs [0049], [0050]; figures 5,6 * | 1 | |
| A | | 2-13 | |
| X | US 2003/122784 A1 (SHKOLNIKOV MARK) 3 July 2003 (2003-07-03) * abstract * * column 5, line 20 - column 8, line 43; figures 3-8 * | 1 | TECHNICAL FIELDS SEARCHED (IPC) H04M |
| A | | 2-13 | |

The present search report has been drawn up for all claims

| Place of search | Date of completion of the search | Examiner |
|---|---|---|
| Munich | 21 October 2005 | Pastore, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 10 6480

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2005

| Patent document cited in search report | | Publication date | Patent family member(s) | | Publication date |
|---|---|---|---|---|---|
| EP 1111879 | A | 27-06-2001 | CN 1301103 A | | 27-06-2001 |
| EP 0917330 | A | 19-05-1999 | AU 748845 B2 | | 13-06-2002 |
| | | | AU 9323198 A | | 10-06-1999 |
| | | | CN 1222819 A | | 14-07-1999 |
| | | | JP 3123490 B2 | | 09-01-2001 |
| | | | JP 11150591 A | | 02-06-1999 |
| | | | US 2001040964 A1 | | 15-11-2001 |
| US 2002009193 | A1 | 24-01-2002 | NONE | | |
| US 2003122784 | A1 | 03-07-2003 | US 2004263479 A1 | | 30-12-2004 |

EPO FORM P0459

For more details about this annex : see Official Journal of the European Patent Office, No. 12/82